(19) Europäisches Patentamt
European Patent Office
Office européen des brevets

(11) **EP 4 002 192 A1**

(12) **EUROPEAN PATENT APPLICATION**

(43) Date of publication:
**25.05.2022 Bulletin 2022/21**

(21) Application number: **20209494.2**

(22) Date of filing: **24.11.2020**

(51) International Patent Classification (IPC):
**G06F 40/216** (2020.01)    **G06F 40/30** (2020.01)

(52) Cooperative Patent Classification (CPC):
**G06F 40/216; G06F 40/30**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2020 KR 20200151469**

(71) Applicant: **42Maru Inc.**
**Seoul 08801 (KR)**

(72) Inventors:
• **KIM, Dong Hwan**
  **Seoul 02087 (KR)**
• **DO, Gang Ho**
  **Seoul 08779 (KR)**
• **SOHN, Ah Rim**
  **Seoul 07281 (KR)**
• **LEE, Eun Jeong**
  **Seoul 05572 (KR)**

(74) Representative: **Gramm, Lins & Partner**
**Patent- und Rechtsanwälte PartGmbB**
**Freundallee 13a**
**30173 Hannover (DE)**

(54) **METHOD AND DEVICE FOR SELECTING ANSWER TO MULTIPLE CHOICE QUESTION**

(57)    The present disclosure relates to a method and device for generating an answer to a multiple-choice question, and an object of the present disclosure is to improve accuracy of answer generation by predicting an incorrect answer as well as a correct answer through a plurality of networks. In order to achieve the above object, the present disclosure provides a device for detecting an incorrect answer based on a text, a question, and a plurality of options corresponding to a multiple-choice question, including: a first network that predicts a correct answer by calculating a correct answer probability corresponding to each of the plurality of options, a second network that predicts an incorrect answer by calculating an incorrect answer probability corresponding to each of the plurality of options, and a third network that selects a final prediction based on the correct answer probability of the first network and the incorrect answer probability of the second network.

FIG. 5

**Description**

BACKGROUND OF THE INVENTION

Field of the Invention

The present disclosure relates to a method and device for selecting an answer to a multiple-choice question, and more particularly, to a model for accurately selecting an answer to a question having a plurality of examples.

Description of the Related Art

Machine reading comprehension (MRC) and question answering (QA) are one of the basic tasks for understanding natural language, and due to the increasing complexity of deep neural networks and the transfer of knowledge of pre-trained language models for a large-scale corpus, the state-of-the-art QA model has reached the human level in terms of performance. However, in the case of the multiple-choice question, the existing extraction-type question and answer system is less accurate. Therefore, there is a need to improve the performance of the question and answer system.

SUMMARY OF THE INVENTION

The present disclosure is to solve the above-described problem, and an object of the present disclosure is to improve accuracy of selecting an answer of a multiple choice question by predicting not only a correct answer probability but also an incorrect answer probability using a plurality of networks.

In order to achieve the above object, the present disclosure provides a device for detecting an incorrect answer based on a text, a question, and a plurality of options corresponding to a multiple choice question, including: a first network that predicts a correct answer by calculating a correct answer probability corresponding to each of the plurality of options, a second network that predicts an incorrect answer by calculating an incorrect answer probability corresponding to each of the plurality of options, and a third network that selects a final prediction based on the correct answer probability of the first network and the incorrect answer probability of the second network.

BRIEF DESCRIPTION OF THE DRAWINGS

FIG. 1 is a diagram illustrating an architecture for generating an answer to a multiple-choice question according to an embodiment of the present disclosure;
FIG. 2 is a diagram illustrating a configuration of a first network according to an embodiment of the present disclosure;
FIG. 3 is a diagram illustrating a configuration of a second network according to the embodiment of the present disclosure;
FIG. 4 is a diagram illustrating a configuration of a third network according to the embodiment of the present disclosure; and
FIG. 5 is a flowchart illustrating a method for generating an answer to a multiple-choice question according to an embodiment of the present disclosure.

DETAILED DESCRIPTION OF THE PREFERRED EMBODIMENTS

The above-described objects, features, and advantages will be described later in detail with reference to the accompanying drawings, and accordingly, those of ordinary skill in the art to which the present disclosure pertains will be able to easily implement the technical idea of the present disclosure. In describing the present disclosure, if it is determined that the detailed description of the known art related to the present disclosure may unnecessarily obscure the gist of the present disclosure, a detailed description therefor will be omitted.

In the drawings, the same reference numerals are used to designate the same or similar elements, and all combinations described in the specification and claims may be combined in any manner. Unless otherwise specified, it should be understood that references to singular expressions may include more than one, and references to singular expressions may also include plural expressions.

The terms used in this specification are for the purpose of describing specific exemplary embodiments only and are not intended to be limited. Singular expressions as used herein may also be intended to include plural meanings unless clearly indicated otherwise in the corresponding sentence. The term "and/or" includes all combinations and any of the items listed in connection therewith. The terms "include", "including", "comprising", "having", and the like have inclusive meanings, and accordingly, these terms specify features, integers, steps, actions, elements, and/or components described herein, and does not preclude the presence or addition of one or more other features, integers, steps, actions, elements, components, and/or groups thereof. The steps, processes, and actions of the methods described herein should not be construed as necessarily performed in the particular order discussed or illustrated, unless the order in which they are specifically performed is determined. It should also be understood that additional or alternative steps may be used.

In addition, each component may be implemented as a hardware processor, the above components may be integrated to be implemented as a single hardware processor, or the above components may be combined with each other to be implemented as a plurality of hardware processors.

Hereinafter, exemplary embodiments of the present disclosure will be described in detail with reference to the accompanying drawings.

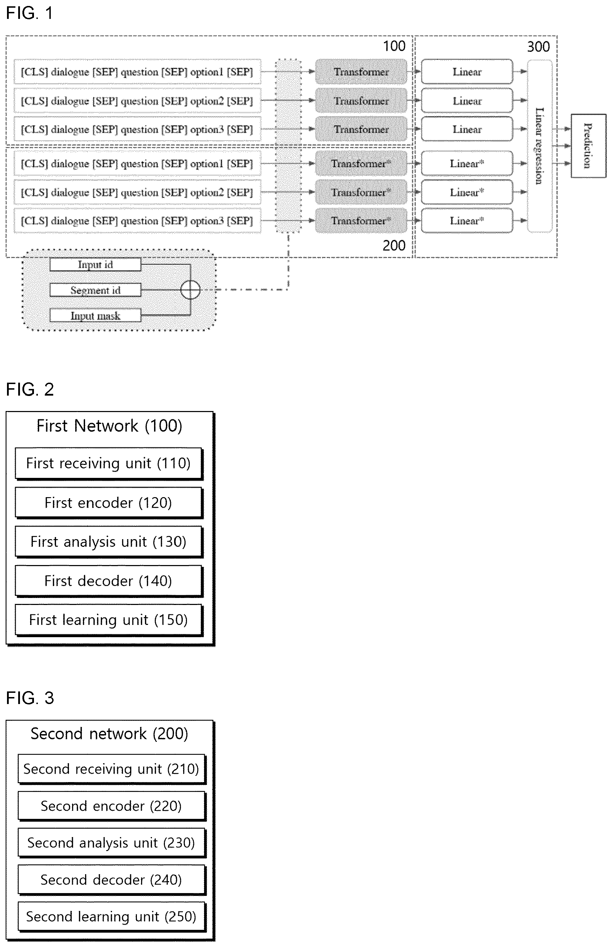

FIG. 1 is a diagram showing an architecture for generating an answer to a multiple-choice question according to an embodiment of the present disclosure. Referring to FIG. 1, the architecture for generating an answer of a multiple choice question according to the present disclosure includes a first network that predicts a correct answer by calculating a correct answer probability corresponding to a text, a question, and a plurality of options, a second network that predicts an incorrect answer by calculating an incorrect answer probability, and a third network that predicts a final prediction based on output values from the first network and the second network. The architecture according to the present disclosure will improve the accuracy of predicting the correct answer through a process of further detecting an incorrect answer in predicting the correct answer to the multiple-choice question. The first and second networks according to the embodiment of the present disclosure may employ a transformer structure, and may use a BERT-large model in which a first encoder 120 and a second encoder 220 are configured in 24 layers.

FIG. 2 is a diagram illustrating a configuration of the first network according to the embodiment of the present disclosure. Referring to FIG. 2, the first network 100 is an artificial neural network that predicts a correct answer by calculating a correct answer probability of each option based on a text, a question, and a plurality of options. Specifically, the first network 100 may include a first receiving unit 110, the first encoder 120, a first analysis unit 130, a first decoder 140, and a first learning unit 150.

The first receiving unit 110 may receive a text, a question, and a plurality of options from a user. The text has the form of Passage or Dialogue, and the question and the options are subordinate to the text. The text, the question, and the options are classified through segment ID. The text, the question, and the plurality of options received by the first receiving unit 110 may have the form of {([CLS] text [SEP] question [SEP] option 1[SEP]), ([CLS] text [SEP] question [SEP] option 2[SEP]),..., ([CLS] text [SEP] question [SEP] option n[SEP])}. An example of the text, the question, and the plurality of options may include a question of the non-literary part in the language field of the college scholastic aptitude test.

The first encoder 120 may include a plurality of encoders, in which the encoder may be allocated to the text, the question, and the options, respectively, for data processing, or one encoder may be allocated to the text, the question, and all the options. The first encoder 120 may generate a first text vector, a first question vector, and a plurality of first option vectors by encoding the text, the question, and each of the plurality of options. The first encoder 120 will encode the text, the question, and the plurality of options in units of morpheme.

The first analysis unit 130 is configured in a linear layer, and may analyze how much the plurality of options approximate the correct answer based on the first text vector, the first question vector, and the first option vector generated from the first encoder 120 and calculate a first score for each of the first option vectors according to the analysis result. The first analysis unit 130 may use a conventional method in calculating an association between the first option vector and the first text vector/first question vector.

The first analysis unit 130 may calculate the first score for the first option vector by determining how much the first option vector is associated with the first text vector and the first question vector. The first analysis unit 130 calculates the first score as 10 points when the first option vector has a high association with the first text vector and the first question vector, and calculates the first score as -10 points when the first option vector has a low association with the first text vector and the first question vector.

For example, when the content of a part of the text received by the first receiving unit 110 is "Mom is so happy now.", the question is "Choose an example that best represents mother's current mood", and the option is "1. joy, 2. sadness, 3. excitement, 4. longing, 5. anger", the first analysis unit 130 may calculate a first score for option 1 as 7 points, a first score for option 2 as -10 points, a first score for option 3 as 3 points, a first score for option 4 as -8 points, and a first score for option 5 as -10 points.

The first analysis unit 130 may generate a first score list $A(u, i, j)$ based on a first score for each of the first option vectors. The $A(u, i, j)$ means the first score $j$ of the first option vector $i$ for the first question vector $u$, and as there are the plurality of first option vectors, the first score list $A(u, i, j)$ will be a list of multidimensional spaces.

For example, if there are 5 first option vectors and each of the first scores is 7, -10, 3, -8, and -10, the first analysis unit 130 represents the first score list $A(u, i, j)$ for each of the first option vectors as $A(u, \{(1, 7), (2, -10), (3, 3), (4, -8), (5, -10)\})$.

The first learning unit 150 may improve the accuracy of the first network 100 by using a cross entropy function. The first learning unit 150 may train the first network 100 such that it calculates a loss of the first network 100 based on the first option vector having the highest value among the first scores generated by the first analysis unit 130 and the first option vector including a label indicating a correct answer (preset actual correct answer) of the first question and makes the loss smallest.

In other words, when training the first network 100 based on training data, the first learning unit 150 may train the first network 100 based on the preset correct answer of the text, the question, and the plurality of options that are received from the first receiving unit 110, instead of a third option vector.

The first learning unit 150 may calculate the loss of the first network 100 using the following Equation 1. In the following Equation 1, y denotes the first option vector having the highest first score, and $\hat{y}$ denotes the first option vector including the label indicating the preset correct answer (actual correct answer).

[Equation 1]

$$Loss_{correct} = -\sum y \log \hat{y}$$

The first decoder 140 may decode the first score list A(u, i, j) assigned to each of the first option vectors.

FIG. 3 is a diagram illustrating a configuration of a second network according to the embodiment of the present disclosure. Referring to FIG. 3, a second network 200 is an artificial neural network that predicts an incorrect answer by calculating an incorrect answer probability of each option based on a text, a question, and a plurality of options. The second network 200 may include a second receiving unit 210, a second encoder 220, a second analysis unit 230, a second decoder 240, and a second learning unit 250. Since the operation of the second receiving unit 210 and the second encoder 220 are the same as the first receiving unit 110 and the first encoder 120 of the first network 100, detailed descriptions thereof will be omitted.

The second receiving unit 210 may receive a text, a question, and a plurality of options from a user.

The second encoder 220 may include a plurality of encoders, in which the encoder may be allocated to the text, the question, and the options, respectively, for data processing, or one encoder may be allocated to the text, the question, and all the options. The second encoder 220 may generate a second text vector, a second question vector, and second option vectors by encoding the text, the question, and each of the plurality of options. The second encoder 220 will encode the text, the question, and the plurality of options in units of morpheme.

The second analysis unit 230 is configured in a linear layer, and may analyze how much each of the plurality of options approximate the incorrect answer based on the second text vector, the second question vector, and the second option vector generated from the second encoder 220 and calculate a second score for each of the second option vectors according to the analysis result. The second analysis unit 230 may use a conventional method in calculating an association between the second option vector and the second text vector/second question vector.

The second analysis unit 230 may calculate the second score corresponding to the second option vector by determining how much the second option vector is not associated with the second text vector and the second question vector. The second analysis unit 230 may calculate the second score as 10 points when the second option vector has a low association with the second text vector and the second question vector, and calculate the second score as -10 points when the second option vector has a high association with the second text vector and the second question vector.

For example, when the content of a part of the text received by the second receiving unit 210 is "Mom is so happy now.", the question is "Choose an example that best represents mother's current mood", and the option is "1. joy, 2. sadness, 3. excitement, 4. longing, 5. anger", the second analysis unit 230 calculates a second score for option 1 as -7 points, a second score for option 2 as 10 points, a second score for option 3 as -3 points, a second score for option 4 as 8 points, and a second score for option 5 as 10 points.

The second analysis unit 230 divides the second score into two by using a sigmoid function and divides the correct answer and the incorrect answer into 0 and 1. The second analysis unit 230 may detect all incorrect answers based on the sigmoid function. In the following Equation 2, x denotes a second score.

The second analysis unit 230 may generate a second score list B(u, i, j) based on the second score to which the sigmoid function is applied for each of the second option vectors. For example, the B(u, i, j) means the second score j of the second option vector i for the second question vector u, and as there are the plurality of second option vectors, the B(u, i , j) will be a list of multidimensional spaces. The second score j may be a result value divided according to the sigmoid function.

## [Equation 2]

$$Sigmoid(x) = \frac{e^x}{e^x + 1}$$

For example, if there are 5 second option vectors and each of the second scores to which the sigmoid function is applied is 0, 1, 0, 1, and 1, the second analysis unit 230 represents the second score list B(u, i, j) for each of the second option vectors as B(u, {(1, 0), (2, 1), (3, 0), (4, 1), (5, 1)}).

The second learning unit 250 may improve the accuracy of the second network 200 by using a cross entropy function. The second learning unit 250 may train the second network 200 such that it calculates a loss of the second network 200 based on a second option vector having a second score of 1 and a second option vector including a label indicating an incorrect answer (actual incorrect answer) of a second question and makes the loss smallest.

In other words, when training the second network 200 through the training data, the second learning unit 250 may be based on a preset incorrect answer of the second question.

The second learning unit 250 may calculate the loss of the second network 200 using the following Equation 3. In the following Equation 3, y denotes the second option vector including the label indicating the preset incorrect answer (preset actual incorrect answer), and $\hat{y}$ denotes the second option vector in which the second score calculated by the second network 200 has a value of 1. $\hat{y}$ will be the result value of the sigmoid function performed by the second analysis unit 230.

## [Equation 3]

$$Loss_{wrong} = -\sum y \cdot \log \hat{y} + (1 - y) \cdot \log 1 - \hat{y}$$

The second decoder 240 may decode the second score list B(u, i, j) assigned to each of the second option vectors.

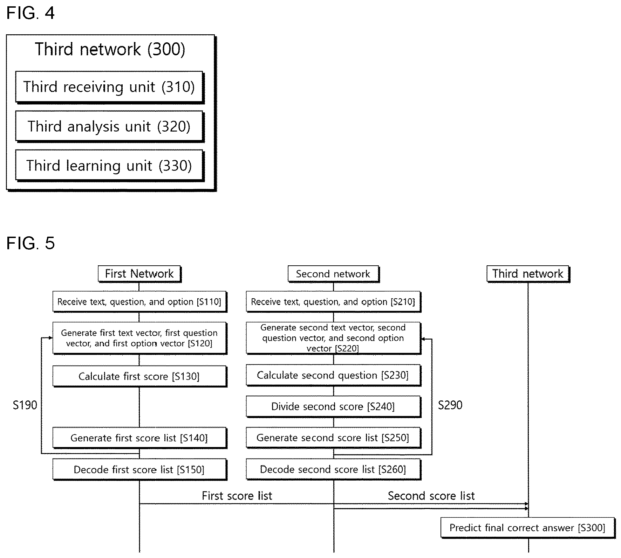

FIG. 4 is a diagram illustrating a configuration of a third network according to the embodiment of the present disclosure. Referring to FIG. 4, the third network 300 is an artificial neural network that predicts the final prediction based on the output values from the first network 100 and the second network 200. The third network 300 may include a third receiving unit 310, a third analysis unit 320, and a third learning unit 330.

The third receiving unit 320 may receive data decoded in the first network 100 and the second network 200.

The third analysis unit 320 will predict the final prediction based on the first score list and the second score list received by the third receiving unit 310. Specifically, the third analysis unit 320 may predict the final prediction based on the first score included in the first score list and the second score to which the sigmoid function included in the second score list is applied.

The third analysis unit 320 will predict the final prediction using the following Equation 4. In the following Equation 4, $p_c$ denotes the first score for each of the first option vectors of the first network 100, $p_w$ denotes the second score to which the sigmoid function is applied for each of the second option vectors of the second network 200, and w is a trainable variable (weight), w may be trained through the third learning unit 320.

Describing the operation of the following Equation 4 in more detail, the third analysis unit 320 will select the option having the highest value as the correct answer after subtracting the value obtained by assigning a weight to the second score from the first score value. In this way, the present disclosure may reduce the possibility of selecting a wrong correct answer by considering both the correct answer and the incorrect answer in the multiple-choice question.

## [Equation 4]

$$Prediction = argmax(p_c - w \cdot p_w)$$

The third analysis unit 320 may predict a final prediction and generate a final prediction vector having a C(u, i, k) form. The C(u, i, k) denotes k (a final prediction label) indicating whether the option i for the question u is correct or not, and may be represented as C(u, 2, 1) when the option 2 for the question u is a correct answer.

The third learning unit 330 may compare the first score list of the first network and the second score list of the second network with the final prediction vector, and may train w of the above Equation 4 so that the result value is appropriate. The third learning unit 330 will improve the accuracy of the correct answer through this process.

FIG. 5 is a flowchart of a method of generating an answer to a multiple-choice question according to the embodiment of the present disclosure. Hereinafter, the method for generating an answer to a multiple-choice question according to the embodiment of the present disclosure will be described with reference to FIG. 5. In a description of the method for generating an answer to a multiple-choice question, detailed embodiments overlapping with the architecture for generating an answer to a multiple-choice question described above may be omitted.

The method for generating an answer of a multiple choice question according to the present disclosure will be operated by the first network that predicts a correct answer by calculating a correct answer probability corresponding to a text, a question, and a plurality of options, a second network that predicts an incorrect answer by calculating an incorrect answer probability, and a third network that predicts a final prediction based on output values from the first network and the second network.

First, the first network 100 and the second network 200 may receive a text, a question, and a plurality of options from a user (S110 and S210). The text has the form of Passage or Dialogue, and the question and the options are subordinate to the text. The text, the question, and the options are classified through segment ID.

First, the first network 100 may generate a first text vector, a first question vector, and a first option vector by encoding the text, the question, and each of the plurality of options. The first network 100 will encode the text, the question, and the plurality of options in units of morpheme.

The first network 100 may analyze how much the first option vector approximates a correct answer based on the first text vector, the first question vector, and the first option vector, and calculate a first score for each of the first option vectors according to the analysis result (S130). The first network 100 calculates the first score as 10 points when the first option vector has a high association with the first text vector and the first question vector, and calculates the first score as -10 points when the first option vector has a low association with the first text vector and the first question vector.

The first network 100 may generate the first score list A(u, i, j) based on the first score for each of the first option vectors (S140). The A(u, i, j) means the first score j of the first option vector i for the first question vector u, and as there are the plurality of first option vectors, the first score list A(u, i , j) will be a list of multidimensional spaces.

The first network 100 may decode the first score list A(u, i, j) for each of the first option vectors (S150).

Meanwhile, the first network 100 may improve the accuracy of the first network 100 by using a cross entropy function (S190). The first network 100 may train the first network 100 such that it that calculates a loss of the first network 100 based on the first option vector having the highest value among the first scores and the first option vector including a label indicating a correct answer (preset actual correct answer) of the first question and makes the loss of the first network 100 smallest.

The second network 200 may generate a second text vector, a second question vector, and second option vectors by encoding the text, the question, and each of the plurality of options (S220). The second network 200 will encode the text, the question, and the plurality of options in units of morpheme.

The second network 200 may analyze how much each of the plurality of options approximates the incorrect answer based on the second text vector, the second question vector, and the second option vector, and calculate a second score for the second option vector according to the analysis result (S230). The second network 200 may calculate the second score corresponding to the second option vector by determining how much the second option vector is not associated with the second text vector and the second question vector. The second network 200 may calculate the second score as 10 points when the second option vector has a low association with the second text vector and the second question vector, and calculate the second score as -10 points when the second option vector has a high association with the second text vector and the second question vector.

In step 240, the second network 200 may divide the second score by using the sigmoid function to detect all incorrect answers. The second network 200 divides the second score into 0 and 1 by using the sigmoid function and represents the correct answer and incorrect answer.

The second network 200 may generate the second score list B(u, i, j) based on the second score to which the sigmoid function is applied for each of the second option vectors (S250). The B(u, i, j) means the second score j of the second option vector i for the second question vector u, and as there are the plurality of second option vectors, the B(u, i , j) will be a list of multidimensional spaces. In addition, the second score j may be a result value divided according to the sigmoid function.

The second network 200 decodes the second score list B(u, i, j) assigned to each of the second option vectors (S260).

The second network 200 may improve the accuracy of the second network 200 by using the cross-entropy function (S290). The second network 200 may train the second network 200 such that it calculates the loss of the second network 200 based on the second option vector having the second score of a value of 1 (second score of a second score list) and the second option vector including the label indicating the incorrect answer (preset actual incorrect answer) of the second question and makes the loss of the second network 200 smallest.

Steps 120 to 150 of the first network 100 and steps 220 to 260 of the second network 200 will be performed at the same time, and the first network and the second network 200 may transmit the decoded result value to the third network 300 after the above steps (S160 and S270).

The third network 300 may predict a final prediction based on data received from the first network 100 and the second network 200 (S300). The third network 300 predicts the final prediction by using the first score of the first option vector calculated by the first network 100 and the second score to which the sigmoid function is applied for each of the second option vector calculated by the second network 200.

As described above, the present disclosure can provide a suitable answer to a user through a more accurate understanding of the context included in the text, and can also be applied to a technique for grasping the user's intention through the conversation analysis as an example.

According to the present disclosure as described above, it is possible to improve the accuracy of selecting the correct answer of the multiple choice question by predicting not only the correct answer probability but also the incorrect answer probability using the plurality of networks. In addition, as the present disclosure improves the accuracy of selecting the correct answer, it is possible to more accurately grasp the intention of the user's query.

In addition, exemplary embodiments of the present disclosure described in the present specification and shown in the accompanying drawings are only specific examples provided in order to easily describe technical contents of the present disclosure and assist in the understanding of the present disclosure, and are not to limit the scope of the present disclosure. It is obvious to those of ordinary skill in the art to which the present disclosure pertains that other modifications based on the technical idea of the present disclosure can be implemented in addition to the embodiments disclosed herein.

**Claims**

1. A device for generating an answer to a multiple-choice question in a device for detecting an incorrect answer based on a text, a question, and a plurality of options corresponding to the multiple-choice question, the device comprising:

   a first network that predicts a correct answer by calculating a correct answer probability corresponding to each of the plurality of options;
   a second network that predicts an incorrect answer by calculating an incorrect answer probability corresponding to each of the plurality of options; and
   a third network that selects a final prediction based on the correct answer probability of the first network and the incorrect answer probability of the second network.

2. The device for generating an answer to a multiple-choice question of claim 1, wherein the first network
   encodes the text, the question, and the plurality of options to generate a first text vector, a first question vector, and a first option vector, and
   calculates a first score based on an association between the first text vector and the first question vector of the first option vector to generate a first score list corresponding to the first score.

3. The device for generating an answer to a multiple-choice question of claim 1, wherein the first network minimizes a loss in predicting a correct answer using a cross entropy function.

4. The device for generating an answer to a multiple-choice question of claim 1, wherein the second network
   encodes the text, the question, and the plurality of options to generate a second text vector, a second question vector, and a second option vector, and
   calculates a second score based on an association between the second text vector and the second question vector of the second option vector to generate a second score list corresponding to the second score.

5. The device for generating an answer to a multiple-choice question of claim 4, wherein the second network divides the second score into 0 and 1 using a sigmoid function in generating the second score list.

6. The device for generating an answer to a multiple-choice question of claim 1, wherein the second network minimizes a loss in predicting an incorrect answer using a cross entropy function.

7. The device for generating an answer of a multiple choice question of any one of claims 1, 2, and 5, wherein the third network selects a final prediction based on a first score $p_c$ included in the first score list and a second score $p_w$ included in the second score list.

$$Prediction = argmax(p_c - w \cdot p_w) \quad (w = weight)$$

FIG. 1

FIG. 2

First Network (100)

First receiving unit (110)

First encoder (120)

First analysis unit (130)

First decoder (140)

First learning unit (150)

FIG. 3

Second network (200)

Second receiving unit (210)

Second encoder (220)

Second analysis unit (230)

Second decoder (240)

Second learning unit (250)

## FIG. 4

Third network (300)

Third receiving unit (310)

Third analysis unit (320)

Third learning unit (330)

## FIG. 5

| First Network | Second network | Third network |
| --- | --- | --- |

Receive text, question, and option [S110]

Receive text, question, and option [S210]

Generate first text vector, first question vector, and first option vector [S120]

Generate second text vector, second question vector, and second option vector [S220]

Calculate first score [S130]

Calculate second question [S230]

S190

Divide second score [S240]      S290

Generate first score list [S140]

Generate second score list [S250]

Decode first score list [S150]

Decode second score list [S260]

First score list                   Second score list

Predict final correct answer [S300]

Europäisches
Patentamt
European
Patent Office
Office européen
des brevets

# EUROPEAN SEARCH REPORT

**Application Number**

EP 20 20 9494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM HYEONDEY ET AL: "Learning to Classify the Wrong Answers for Multiple Choice Question Answering (Student Abstract)", PROCEEDINGS OF THE AAAI CONFERENCE ON ARTIFICIAL INTELLIGENCE, vol. 34, 7 February 2020 (2020-02-07), pages 13843-13844, XP055801569, ISSN: 2159-5399, DOI: 10.1609/aaai.v34i10.7194 * the whole document * | 1-7 | INV. G06F40/216 G06F40/30 |

-----

**TECHNICAL FIELDS SEARCHED (IPC)**

G06F

The present search report has been drawn up for all claims

| Place of search | Date of completion of the search | Examiner |
|---|---|---|
| Berlin | 5 May 2021 | Stauch, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)